# EUROPEAN PATENT SPECIFICATION

(11) **EP 4 295 719 B1**
(45) Date of publication and mention of the grant of the patent: **17.09.2025**
(21) Application number: 23180794.2
(22) Date of filing: 22.06.2023
(51) Int. Cl.: A43B 1/00, A43B 13/02, A43B 13/04, A43B 13/12, A43B 13/22, B29D 35/14, A43B 1/02

(54) **SHOE SOLE**
SCHUHSOHLE
SEMELLE DE CHAUSSURE

(30) Priority: 22.06.2022 IT 202200013165
(43) Date of publication of application: 27.12.2023
(73) Proprietor: JV International S.r.l., 20122 Milano (IT)
(72) Inventor: MERLO, Ambrogio, 22063 Cantù (Como) (IT)
(74) Representative: Feltrinelli, Secondo Andrea

(56) References cited:
- EP-A1- 1 185 183
- WO-A1-2015/065545
- WO-A1-2016/196770
- FR-A1- 3 046 913
- US-A1- 2004 068 893
- US-A1- 2008 010 863
- US-A1- 2011 047 833
- US-A1- 2016 331 078
- US-A1- 2021 078 267

## Description

### TECHNICAL FIELD OF THE INVENTION

The present invention relates to a new sole for shoes including a fabric layer as well as a shoe comprising such a sole.

### STATE OF THE ART

Soles are commonly provided with a tread layer with a midsole, these components then being connected to an upper of a shoe.

Many solutions have been proposed that differ in components and constraints, including soles with fabric components.

The patent application published under number EP3248494A1 teaches a sole for sports, work, orthopedic, running, walking, trekking shoes, which sole comprises a midsole and an outsole provided with a plurality of cleat elements, independent from each other or joined together so as to have a continuous tread.

Furthermore, one or a plurality of fabric pieces or strips are integrated into the outsole.

Moreover, the thickness of the outer sole varies between 0.5 and 1.5 mm, if desired between 0.5 and 1 mm, preferably between 0.5 and 0.8 mm.

Although this sole is generally thin and resistant, it is not capable of allowing, following prolonged use or different conditions of use, always satisfactory performance.

Moreover, the soles according to the prior art do not guarantee lateral protection of the foot or lateral grip.

It should also be considered that the solutions proposed up to now do not allow for good production flexibility.

WO2016196770A1 discloses a solution according to the state of the art.

### OBJECTS OF THE INVENTION

An object of the present invention is to provide a new sole for shoes.

Another object of the present invention is to provide a new sole for shoes which is both of limited thickness and in any case resistant.

Another object of the present invention is to provide a new sole for shoes which ensures lateral protection of the foot.

Another object of the present invention is to provide a new sole for shoes which allows to obtain a lateral grip.

Another object of the present invention is to provide a new sole for shoes which allows to obtain a good production flexibility.

According to one aspect of the invention, a sole according to claim 1 is provided.

The dependent claims refer to preferred and advantageous embodiments of the invention.

### BRIEF DESCRIPTION OF THE DRAWINGS

Other features and advantages of the invention will be more evident from the description of examples of sole and shoe constructions, illustrated by way of example in the attached drawings in which:
figures 1 and 2 are schematic side views of respective embodiments of a sole not according to the present invention;
figures 3 to 5 are schematic side views of respective embodiments of a sole according to the present invention;
figures 6 to 9 are schematic bottom views of respective embodiments of a sole according to the present invention;
figures 10 and 11 are a schematic side view and a bottom view of another embodiment of a sole according to the present invention;
figure 12 is a schematic side view of another embodiment of a sole according to the present invention.

In the accompanying drawings, identical parts or components are identified by the same reference numbers.

### EMBODIMENTS OF THE INVENTION

The present invention relates to a sole 1 for shoes consisting of at least one fabric layer or component 2 as well as a main support component 3 molded, preferably heat-molded, on or around the fabric layer or component 2.

A sole according to the present invention is for manufacturing technical shoes (for example sports, work, orthopedic, running, walking, trekking shoes etc.), whereby the same is at least partially flexible and therefore not rigid.

The support component 3 has studs 4 or in any case a tread portion for contact with the ground, which is or are clearly directed, in use, towards or protruding downwards.

Moreover, the sole 1 comprises a configuration with a substantially flat main section 1a from the perimeter or periphery of which a lateral wall section extends, for example tubular or annular 1b preferably defining the connection portion of the sole 1 to an upper.

The studs 4 extend from the main section 1a in use, downwards or in any case the tread portion extends or is defined by the main section 1a.

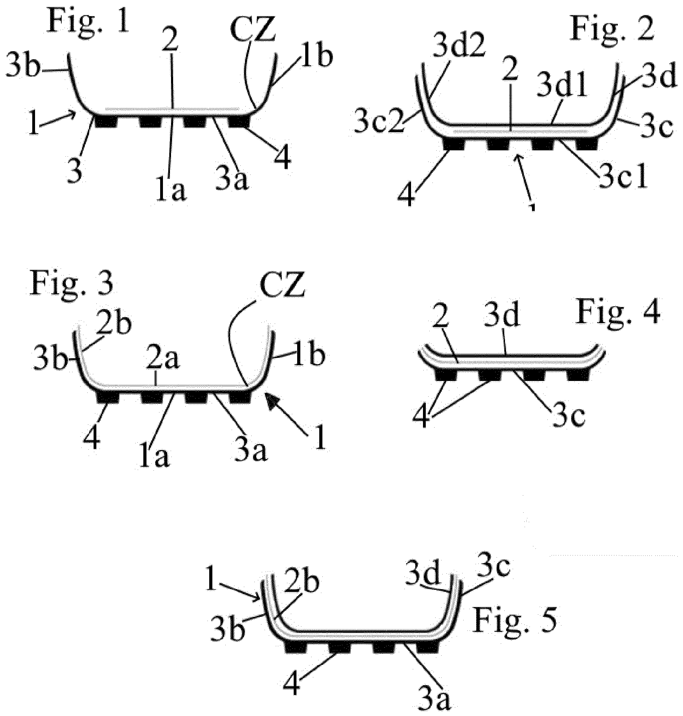

Advantageously, see in particular the embodiments of figures 1 to 5, the tread portion, optionally with studs 4, could also be provided in the lateral wall section.

The extension of the substantially flat main section 1a is substantially configured as the projection of a user's foot on a horizontal plane. The dimensions of the substantially flat main section 1a will therefore vary according to the dimensions of the foot of a standard user.

The thickness of the main section 1a is between 0.8 mm and 1.5 mm, if desired between 0.8 mm and 1.2 mm.

More particularly, the thickness of the fabric 2 could be between 0.1 and 2.7, if desired between 0.1 and 1 mm, for example between 0.2 and 0.6 mm.

The thickness of the support component 3 could be between 0.3 and 2.9 mm.

Therefore, the minimum thickness of 0.1 mm would occur if the main section 1a consists only or mainly of fabric 2, in which case the studs 4 would extend directly from the fabric 2.

The thickness of the annular wall section 1b could be equal to that of the main section 1a or even different from it, if desired less, for example between 1/8 and 3/4 the thickness of the main section 1a.

A concave zone CZ open upwards, in which the foot of a user or even one or more components of a shoe can be located, can therefore be delimited between the main section 1a and the annular wall section 1b.

As far as the studs 4 are concerned, they can be independent from each other or joined together so as to have a continuous tread. Of course, the studs or the tread portion can have any suitable configuration.

With reference in particular to figure 1, it illustrates an embodiment not belonging to the claimed invention with a fabric layer 2 which extends along the main section 1a only.

In this regard, the fabric layer 2 can extend for an extension equal to at least 70% or 80% or 90% or 100% of the main section 1a. With reference to this aspect, the fabric layer 2 is preferably arranged in a central position or in any case not offset with respect to the center line of the main section 1a.

In accordance with this not-limiting embodiment, the fabric layer 2 is arranged above the support component 3, i.e., above an internal, in use, face of the support component 3 or in any case in a position above the support component 3, which, if desired, can also partially enter the overlying fabric layer 2.

Moreover, in accordance with this variant, the support component 3 consists of a single layer in one piece, which extends under the fabric layer 2 and then, laterally to the same or actually wrapping it, goes up to constitute the lateral wall section, for example annular or tubular 1b.

Therefore, the support component 3 comprises a substantially flat lower base part 3a, which, together with the fabric layer 2 constitutes the main section 1a and thus an upper side wall part, for example annular or tubular 3b, extending from the perimeter or periphery of the lower base part 3a.

With reference to the term "tubular" or "annular" used in this text, it is intended a respective component that extends along the entire perimeter of the sole and envelops an internal portion. Clearly, the various components which will optionally be described as tubular could extend throughout the whole periphery or perimeter with or without constant height in the transition from the back to the tip via the flanks. Alternatively, these components could extend only for a part of the perimeter or periphery of the sole, for example at a part only or whole the tip and/or the back and/or the flanks of the sole.

Such considerations should be taken into account as described with reference to each, some or all of the elements or components referred to as lateral, for example tubular or annular.

The upper side wall part, for example annular or tubular 3b, can have a section or width gradually increasing when moving away from the lower base part 3a, at least in an initial portion thereof.

The support component 3 or the fabric layer 2 could also be obtained by means of several elements connected by means of the other component 3, 2 of the sole.

As far as the embodiment of figure 2 is concerned, it is very similar to that of figure 1, but the respective support component 3 consists of two layers 3c, 3d, a first external layer 3c similar to that provided for the example of figure 1 and another or second internal layer 3d designed to cover the sole from the inside.

With regard to this aspect, the fabric layer 2 is arranged in a sandwich position between the two layers 3c and 3d of the support component 3. The two layers 3c, 3d are then molded one on one side and the other on the other side with respect to the fabric layer 2 with constraint between the layers 3c, 3d both at the fabric layer 2, since the molded material of the support component 3 penetrates through the fabric 2, and in positions of the sole in which the latter is not provided.

In this case, both the first 3c and the second 3d layer preferably have a substantially flat length 3c1, 3d1 and a lateral length, for example annular or tubular 3c2, 3d2 extending from the perimeter or periphery of the substantially flat length 3c1, 3d1.

With reference to these characteristics, the two flat lengths 3c1, 3d1 are placed opposite to each other with respect to the fabric layer 2, with possible insertion through the latter, while the two lateral or tubular lengths 3c2, 3d2 are abutted and molded one against the other to form the annular wall section 1b.

As an alternative, the first 3c or second 3d layer has a substantially flat length 3c1, 3d1 only and not also a lateral length, for example tubular 3c2, 3d2.

In this case, the flat lengths 3c1, 3d1 together with the fabric layer 2 constitute the main section 1a, while the tubular length or lengths 3c2, 3d2 define the annular wall section 1b.

The studs 4 or in any case a tread portion can then extend downwards starting from a lower, in use, face of the substantially flat length 3c1 of the first inner layer 3c.

Alternatively, the studs 4 or in any case a tread portion can extend downwards starting from a lower, in use, face of the substantially flat length 3d1 of the second inner layer 3d, in which case the studs 4 or the tread portion could/might extend through the fabric layer 2 and/or the first layer 3c, this clearly depending on the configuration of the fabric layer 2 and the first layer 3c.

With reference to this aspect, the first layer 3c, the second layer 3d and/or the fabric layer 2 could also be obtained by means of several elements connected by means of the other elements of the sole. Thus, for example, the first layer 3c could have several pieces or parts (island-like) connected by the second layer 3d and/or the fabric layer 2 or, the second layer 3d could have several pieces or parts (island-like) connected by the first layer 3c and/or the fabric layer 2 could have several pieces or parts (island-like) connected by means of the first layer 3c and/or the second layer 3d.

Of course, two of these elements 2, 3c, 3d could have several parts connected by means of the third of the same elements 2, 3c, 3d.

As far as figure 3 is concerned, it is very similar to figure 1, but with a fabric layer 2 which extends both in the main section 1a and in the annular wall section 1b.

In relation to this, the fabric layer 2 has a substantially flat or slightly curved first segment 2a and then a second lateral segment, for example tubular or annular 2b, extending, in use, upwards starting from the perimeter or periphery of the substantially flat first segment 2a.

The upper side wall part, for example annular or tubular 2b, has a section or width which gradually increases away from the substantially flat first segment 2a, at least in an initial portion thereof.

With regard to this aspect, the fabric layer 2 constitutes at least 50% or 60% or 70% of the annular wall portion 1b.

The fabric layer 2 or better the respective second lateral segment, for example tubular or annular 2b, has a terminal end aligned or also projecting upwards, if desired by at least 0.1 or 0.2 or 0.5 mm or 1 cm, with respect to the upper side wall part, for example annular or tubular 3b, so that the free end of the sole 1 is actually constituted only by the fabric 2 or by the fabric 2 in combination with the support component 3.

Even in this case, the support component 3 or the fabric layer 2 could be obtained by means of several elements connected by means of the other component 3, 2 of the sole 1.

According to this not-limiting embodiment, the lower base part 3a is actually molded enclosing from the outside the substantially flat first segment 2a, while the upper side wall part, for example annular or tubular 3b is in fact molded enclosing from the outside the second lateral segment, for example tubular or annular 2b.

Advantageously, the fabric layer 2 is molded with a three-dimensional configuration, i.e., with the final configuration it will assume in the shoe, that is to say that to obtain the upper side wall part 3b made up at least partly by the fabric layer, the fabric layer is not cut and then suitably sewn or welded, but the same layer is directly molded with the desired three-dimensional or final configuration and thus not plain or flat configuration.

In this regard, such molding in a three-dimensional or final and not plain or flat configuration is performed upon molding the main support component 3 on or around the fabric layer or component 2, whereby the main support component 3 is molded, preferably heat-molded, on or around the fabric layer or component 2 so as to make the latter assume the three-dimensional or final configuration it takes in the shoe or so as to constrain it in this configuration previously took according to the shape of the mold, owing, if desired, even to the elastic properties of the fabric.

Instead, the examples of figures 4 and 5 are a combination of the examples of figures 2 and 3, in which two layers 3c and 3d of the support component and a fabric layer 2 which extends both in the main section 1a and in the annular wall section 1b are provided.

In this regard, the extension of the annular wall section 1b is smaller in the case of the example of figure 4 than in the examples of figures 1 to 3 and 5.

Thus, for example, the annular wall section 1a can have a height of at least 0.5 mm, if desired at least 2 or 3 or 4 or 5 or 6 cm. Clearly, this height could be constant for the whole perimeter of the sole or even variable in the passage from the back to the front and vice versa.

The fabric layer 2 or better the respective second lateral segment, for example tubular or annular 2b, has an aligned or even protruding terminal end, possibly by at least 0.1 or 0.2 or 0.5 mm or 1 cm, with respect to the support component 3, for example with respect to the upper side wall part, for example annular or tubular 3b, so that the free end of the sole 1 actually consists only of the fabric 2 or of the fabric 2 in combination with the support component 3.

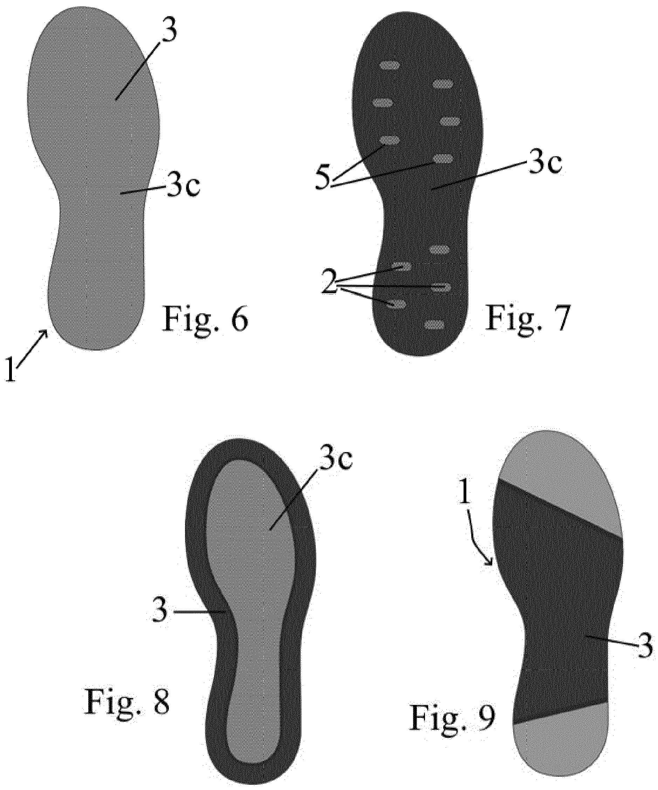

As regards the support component 3, it can be made of transparent or translucent material (see figure 6) so as to show the at least one fabric layer 2 from outside the sole.

Moreover, the support component 3 or an external layer 3c thereof can define one or more through windows 5 (see figure 7) through which it is possible to see the fabric layer 2 from outside the sole.

The support component 3 can then be made in a single color or even in several colors according to the desired configurations (see figures 8 and 9).

Regarding the fabric layer 2, as already partly indicated, it can be made in one piece or it can comprise several pieces connected or not to each other, which are in fact at least partially embedded in or connected to the support component 3 molded around them.

With regards instead to the extension of the fabric layer 2, it can extend for part of the sole or even from the front to the back and from one side to the other of the sole 1.

As an alternative, the fabric layer 2 comprises two, three or more pieces or portions separated from each other and arranged in different positions of the sole 1, for example one at the front and the other at the back of the sole.

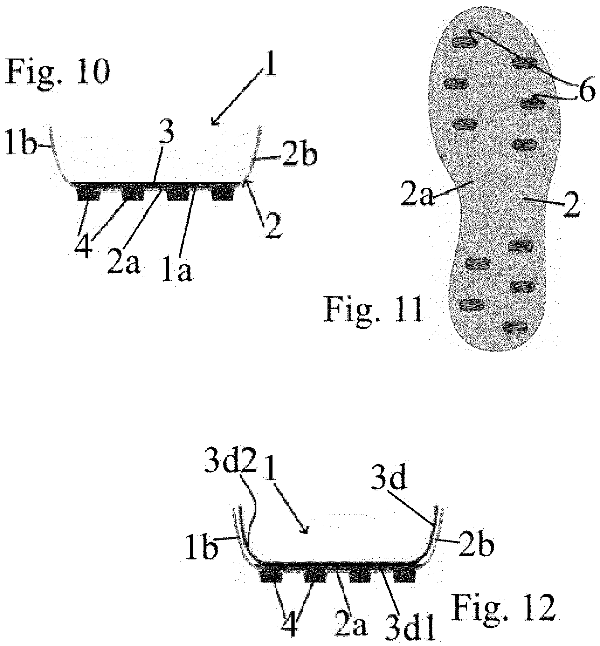

With reference now to the embodiment of figures 10 and 11, it concerns a solution with a fabric layer 2 which constitutes at least 80% or 90% of the annular wall section 1b and, if desired, 100% of the lateral or annular wall section 1b.

Basically, according to this non-limiting variant, the annular wall section 1b is thus mainly or entirely constituted by the fabric layer 2 and a portion of the support component 3 which constitutes the annular wall section 1b is not provided or it is a minority with respect to fabric 2.

However, preferably, the layer of fabric 2 has a first flat segment 2a above or below, in use, the support component 3 and then a second lateral segment, for example tubular or annular 2b extending, in use, upwards starting from the perimeter or periphery of the first flat segment 2a, if desired (if the first flat segment 2a is below, in use, the support component 3) enclosing the support component 3.

In this case the second lateral segment 2b could extend along the entire periphery or perimeter of the sole with a constant or less height in the passage from the back to the toe passing through the flanks or, alternatively, this component could extend only over a part of the perimeter or periphery of the sole, for example at the toe only and/or the back and/or flanks of the sole.

In such a case, the support component 3 could comprise only or mainly a lower base part 3a which is molded above or below the first flat segment 2a.

In accordance with this variant, the fabric layer 2 preferably consists of a single piece.

According to this embodiment, the fabric layer may or may not have windows 6 through which the studs 4 or the tread portion of the overlying support component 3 protrude.

In this regard, all the studs 4 could be provided protruding or passing through windows 6 in the fabric layer 2 or some (for example any percentage between 20% and 90%, for example 30%, 40%, the 50%, 60% or 70%) protruding studs 4 and others studs covered, in use, underneath by the fabric layer 2 or, finally, all the studs 4 covered, in use, underneath by the fabric layer 2.

Alternatively, the lower base part 3a could be molded above the first flat segment 2a, i.e., at an upper, in use, face of the same, while the studs 4 could be molded under the first flat segment 2a, i.e., at a face, in use, lower thereof, so that the material for obtaining the lower base part 3a and the studs 4 would permeate through the fabric layer 2 so as to constrain or in fact weld or firmly connect the studs and the first flat segment 2a with interposition of the fabric layer 2.

As far as the embodiment of figure 12 is concerned, it is similar to that of figure 10 with a support component 3 provided with an internal layer 3d designed to line the sole from the inside, which has a substantially flat length 3d1 and a lateral length, for example annular or tubular 3d2 protruding from the perimeter or periphery of the substantially flat length 3d1.

The fabric layer 2 may have the following characteristics:
- thickness between 0.1 and 2.7 mm, between 0.1 and 1 mm, for example about 0.2 mm, about 0.65 mm or about 0.85 mm or between 0.5 and 0.7 mm (0.64),
- weight between 120 and 140 g/m² (133),
- tensile strength between 8 and 12 kg/cm,
- elongation rate between 30 and 50%,
- tear strength between 40 and 60 N.

The fabric layer 2 is made of polyester, nylon, rayon, aramid fibers, thermoplastic fibers, metal fibers or mixtures thereof. Preferably, the fabric layer 2 is made of polyester, nylon, rayon or mixtures thereof.

Preferably, the fabric layer 2 is made wholly or partly of Kevlar or polyester.

Thus, for example, the fabric layer 2 can comprise nylon in a percentage by weight of the total equal to about 65-75%, for example 69-71% and/or Kevlar in a percentage by weight of the total equal to about 5-15%, for example 9-11%, if desired between 10.5 and 11%.

Advantageously, the fabric layer 2 also comprises a percentage by weight of the total equal to about 1-10% or between 1 and 3%, for example 1.5-2.5%, if desired between 1.5 and 1.8% of an elasticizing component, for example a synthetic polyurethane fiber, such as spandex (or elastane).

If desired, the fabric layer 2 also comprises a percentage by weight of the total equal to about 15-20%, for example 16-18% of polyurethane.

Such a fabric layer 2 with nylon, Kevlar, spandex and polyurethane may have the following characteristics:
- thickness about 1.3 mm,
- weight equal to about 380 g/m²,
- tensile strength L:55 and W:29 kg/in,
- stretch rate L:39 and W:62 %,
- tear resistance L:5 and W:3 kg.

Another fabric, which can be used in a shoe according to the present invention is 100% polyester.

Such polyester could have the following features:
- thickness about 0,2 - 0,24mm
- weight equal to about 90 g/m²
   or alternatively
- thickness: 0,85mm,
- weight 225 - 230 g/m²
   or
- thickness: 0.65mm; And
- weight: 134 g/m².

As it will be possible to ascertain, in accordance with the present invention, the support component 3 is molded together with or on the fabric layer 2, in such a way that the support component 3 also partially extends through the fabric layer 2, so that the support component 3 and the stud elements 4 or the tread portion thereof are bound to the fabric layer 2.

More particularly, one or more plates of support component material is arranged in an impression of a mold above and/or below a fabric layer 2 and then by molding the support component 3 as well as the partial insertion of the material thereof within the fabric layer, i.e., between the meshes of the fabric element is obtained.

Thanks to the present invention, therefore, a sole or rather an outer sole is obtained which is resistant and thin, thanks to the presence of a fabric layer which constitutes, in fact, an armoring or reinforcing or stiffening element for the support component 3.

As the fabric layer 2 also extends over the annular wall section 1b, it also reinforces the sole at this section and can also constitute the portion of connection to an overlying upper.

By fabric layer is meant an element made by means of a weaving of threads, for example perpendicular to each other or not, which threads constitute a plurality of stitches or braid constrained to each other.

Moreover, the final sole will preferably consist of the fabric layer 2 and of the support component 3 only, which elements will be connected directly to the upper of a shoe, without the interposition of other layers or elements.

In this regard, the support component 3 can be made of a single material, of a mixture of several materials or of several assembled layers, each of which layers can be made of a material that is the same or different from the other layers.

Alternatively, the support component 3, according to a less preferred variant, could comprise only stud elements 4 which are molded on the fabric layer 2 without providing plates or layers of the support component.

Preferably, the support component 3, in particular the studs 4 or a tread portion thereof, protrudes/protrude downwards relative to the fabric layer 2, so that the support component 3 or the studs 4 thereof come into contact with the ground, preventing or in any case limiting rubbing of the fabric layer 2 with the ground and thus that the fabric layer 2 is damaged.

The support component can be made of a material selected from the group consisting of natural or synthetic rubber, thermoplastic or thermosetting materials, which material may or may not be foamed.

Thus, for example, the support component 3 is made of a material selected from the group consisting of styrene butadiene or SBR, acrylonitrile butadiene or NBR, polybutadiene or BR, polychloroprene or CR, bromo isobutylene isoprene or BIIR, polyisoprene natural rubber or NR.

Moreover, the support component 3 can also be made of two or more materials, in particular if it comprises layers or parts that are different or connected to each other, but placed one on opposite sides of the other with respect to the fabric layer 2.

However, the shoe may or may not include a midsole.

A shoe in accordance with the present invention comprises a sole 1 as indicated above and a portion of upper or an upper, for example constrained or connected to the sole 1 or in one piece with the latter.

Preferably, the shoe comprises a sole 1 consisting of a fabric layer 2 and of a support component 3 only, which elements will be connected directly to the upper of the shoe, without the interposition of other layers or elements.

If desired, the upper delimits, together with the unit consisting of the fabric layer 2 and the support component 3, the zone for receiving the foot of a user composed at the bottom by the concave zone.

The upper can be housed and connected (glued, stitched, molded, etc.) to the sole 1, for example stitched at the upper, in use, free end of the sole 1 consisting of the support component 3 and/or the fabric layer 2

The upper is preferably open downwards, and constrained or connected (for example glued, stitched or molded) at its own lower, in use, wall portion or end to the sole 1, for example to the section 1a and/or 1b of the sole 1, if desired at the upper, in use, free end of the section 1b.

Alternatively, the upper comprises a bottom wall resting on the inner and upper face of the section 1a of the sole 1, as well as a lateral tubular wall extending upwards starting from the outer edge of the bottom wall and if desired in support or contact or constraint or connection, for all or part of its extension, with the section 1b of the sole 1.

If desired, the portion of the upper could consist of the sole itself, or rather of a fabric layer 2 thereof which extends from the sole upwards to form all or part of the upper.

Clearly, it could also be considered to provide another component for completing the upper, which component would be constrained (for example sewn) to the portion of the upper.

As will be understood, in a sole and in a shoe according to the present invention, the fabric layer 2 reinforces the support component 3, without however affecting, but rather improving the flexibility of the sole, both with reference to elongation and resistance of the same.

Moreover, a sole according to the present invention guarantees lateral protection of the foot, thanks to the fact that it also has a lateral wall, preferably tubular.

This also ensures lateral grip, which can be useful in the practice of some sports. This characteristic is increased where the tread portion, possibly with studs 4, is also provided in the side wall section.

It will then be understood that a sole according to the present invention guarantees a high production flexibility, since it is possible to lodge in the sole or better in the concave zone CZ for example a midsole or more components or layers or even directly the foot of a user, according to the performance to be achieved.

Modifications and variations of the invention are possible within the scope of protection defined by the claims.

## Claims

1. Shoe sole consisting of at least one fabric layer or component (2) as well as a support component (3) molded on or around said at least one fabric layer (2), said support component (3) having studs (4) or a tread portion for coming into contact with the ground, said sole comprising a configuration with a substantially flat main section (1a) from the perimeter of which a lateral or annular wall section (1b) extends, said studs (4) extending from the main section (1a) in use, downwards or in any case the tread portion extends or is defined by said main section (1a),
wherein said fabric layer (2) is made of polyester, nylon, rayon, aramid fibers, thermoplastic fibers, metal fibers or mixtures thereof, while said support component (3) is made of a material selected from the group consisting of styrene butadiene or SBR, acrylonitrile butadiene or NBR, polybutadiene or BR, polychloroprene or CR, bromo isobutylene isoprene or BIIR, polyisoprene natural rubber or NR, and
wherein the thickness of the main section (1a) of the sole is comprised between 0.8 mm and 1.5 mm,
wherein said at least one fabric layer (2) extends both in said substantially flat main section (1a) and in said lateral or annular wall section (1b), and
wherein said at least one fabric layer (2) constitutes at least 50% or 60% or 70% of said lateral or annular wall section (1b),
wherein
said at least one fabric layer (2) has a first substantially flat segment (2a) and thus a second lateral segment (2b) extending, in use, upwards starting from the perimeter or periphery of the first substantially flat segment (2a), said at least one fabric layer (2) in said lateral or annular wall section (1b) having a terminal end aligned or even protruding upwards with respect to the support component (3).

2. Sole according to claim 1, wherein said at least one fabric layer (2) constitutes at least 90% of said lateral or annular wall section (1b).

3. Sole according to claim 2, wherein said at least one fabric layer (2) constitutes 100% of said lateral or annular wall section (1b).

4. Sole according to any one of claims 1 to 3, wherein said main support component (3) is molded on or around the fabric layer or component (2) so as to make the latter assume the three-dimensional or final configuration which it takes in the shoe or so as to constrain it in this previously took configuration.

5. Sole according to any one of the preceding claims, wherein said support component (3) is made of transparent or translucent material so as to show said at least one fabric layer (2) on the outside of the sole.

6. Sole according to any one of the preceding claims, wherein said support component (3) defines through windows (5) through which it is possible to see said at least one fabric layer (2) from outside the sole.

7. Sole according to any one of the preceding claims, wherein the thickness of said at least one fabric layer (2) is comprised between 0.1 and 1.0 mm.

8. Sole according to the preceding claim, wherein the thickness of said at least one fabric layer (2) is comprised between 0.2 and 0.6 mm.

9. Sole according to any one of the preceding claims, wherein said at least support component (3) consists of two layers (3c, 3d), a first outer layer (3c) and a second inner layer (3d) arranged to line the inside the sole, the fabric layer (2) being arranged in a sandwich position between the two layers (3c and 3d) of the support component (3),
said first (3c) and said second (3d) layer of the support component (3) having a substantially flat length (3c1, 3d1) and a lateral length (3c2, 3d2) extending from the perimeter or periphery of the substantially flat length (3c1, 3d1).

10. Sole according to claim 9, wherein said two flat lengths (3c1, 3d1) are placed one opposite the other with respect to the fabric layer (2), while the two lateral lengths (3c2, 3d2) are abutting and molded against each other to form the side or annular wall section (1b).

11. Sole according to any one of claims from 1 to 8, wherein said at least one fabric layer (2) has a first flat segment (2a) above or below, in use, the support component (3) and thus a second lateral segment (2b) extending, in use, upwards from the perimeter or periphery of the first flat segment (2a), said support component (3) comprising only a lower base part (3a) which is molded above or below the first flat segment (2a).

12. Sole according to any one of the preceding claims, wherein said at least one fabric layer is made entirely or partially of Kevlar.

13. Sole according to the preceding claim, wherein said at least one fabric layer (2) comprises nylon in a percentage by weight of the total equal to about 65-75% and Kevlar in a percentage by weight of the total equal to about 5-15 %.

14. Sole according to any one of the preceding claims, wherein said at least fabric layer (2) comprises a percentage by weight on the total equal to about 1-10% of an elasticizing component.

15. Sole according to claims 12, 13 and 14, wherein said at least one fabric layer (2) comprises:
- nylon in a percentage by weight of the total equal to about 69-71%,
- Kevlar in a percentage by weight of the total equal to about 9-11%,
- spandex as an elasticizing component in a weight percentage of the total equal to about 1.5-2.5%,
- polyurethane in a percentage by weight of the total equal to about 16-18%.

16. Sole according to any one of claims 1 to 11, wherein said at least one fabric layer is made entirely or partially of polyester.

17. Sole according to the preceding claim, wherein said at least one fabric layer has the following characteristics:
- thickness about 0,2 - 0,24mm
- weight equal to about 90 g/m²
or as an alternative
- thickness: 0,85mm,
- weight 225 - 230 g/m²
or
- thickness: 0.65mm; and
- weight: 134 g/m².

18. Shoe comprising at least one sole according to any one of the preceding claims and a portion of the upper or an upper constrained or connected to the sole or in one piece with the latter.

## Patentansprüche

1. Schuhsohle, bestehend aus mindestens einer Gewebeschicht oder -komponente (2) sowie einer Stützkomponente (3), die auf oder um die besagte mindestens eine Gewebeschicht (2) geformt ist, wobei die besagte Stützkomponente (3) Stollen (4) oder einen Laufflächenabschnitt aufweist, um mit dem Boden in Kontakt zu kommen, wobei die besagte Sohle eine Konfiguration mit einem im Wesentlichen flachen Hauptbereich (1a) aufweist, von dessen Umfang sich ein seitlicher oder ringförmiger Wandbereich (1b) erstreckt, wobei sich die besagten Stollen (4) von dem Hauptbereich (1a) im Gebrauch nach unten erstrecken oder in jedem Fall der Laufflächenabschnitt sich durch den besagten Hauptbereich (1a) erstreckt oder durch diesen definiert ist,
worin die besagte Gewebeschicht (2) aus Polyester, Nylon, Rayon, Aramidfasern, thermoplastischen Fasern, Metallfasern oder Mischungen davon hergestellt ist, während die besagte Stützkomponente (3) aus einem Material hergestellt ist, das aus der Gruppe ausgewählt ist, die aus Styrol-Butadien oder SBR, AcrylnitrilButadien oder NBR, Polybutadien oder BR, Polychloropren oder CR, Brom-Isobutylen-Isopren oder BUR, Polyisopren-Naturkautschuk oder NR besteht, und
worin die Dicke des Hauptbereichs (1a) der Sohle zwischen 0,8 mm und 1,5 mm liegt,
worin sich die besagte mindestens eine Gewebeschicht (2) sowohl in dem besagten im Wesentlichen flachen Hauptbereich (1a) als auch in dem besagten seitlichen oder ringförmigen Wandbereich (1b) erstreckt, und
worin die besagte mindestens eine Gewebeschicht (2) mindestens 50 % oder 60 % oder 70 % des besagten seitlichen oder ringförmigen Wandbereichs (1b) ausmacht,
worin
die besagte mindestens eine Gewebeschicht (2) ein erstes, im Wesentlichen flaches Segment (2a) aufweist und somit ein zweites seitliches Segment (2b), das sich im Gebrauch vom Umfang oder der Peripherie des ersten, im Wesentlichen flachen Segments (2a) ausgehend nach oben erstreckt, wobei die besagte mindestens eine Gewebeschicht (2) in dem besagten seitlichen oder ringförmigen Wandbereich (1b) ein in Bezug auf die Stützkomponente (3) nach oben ausgerichtetes oder sogar vorstehendes Ende aufweist.

2. Sohle nach Anspruch 1, worin die besagte mindestens eine Gewebeschicht (2) mindestens 90 % des besagten seitlichen oder ringförmigen Wandbereichs (1b) ausmacht.

3. Sohle nach Anspruch 2, worin die besagte mindestens eine Gewebeschicht (2) 100 % des besagten seitlichen oder ringförmigen Wandbereichs (1b) ausmacht.

4. Sohle nach irgendeinem der Ansprüche 1 bis 3, worin die besagte Hauptstützkomponente (3) auf oder um die Gewebeschicht oder -komponente (2) herum geformt ist, so dass letztere die dreidimensionale oder endgültige Konfiguration annimmt, die sie im Schuh einnimmt, oder so, dass sie in dieser zuvor eingenommenen Konfiguration befestigt wird.

5. Sohle nach irgendeinem der vorangegangenen Ansprüche, worin die besagte Stützkomponente (3) aus transparentem oder durchscheinendem Material besteht, so dass die besagte mindestens eine Gewebeschicht (2) an der Außenseite der Sohle gezeigt wird.

6. Sohle nach irgendeinem der vorangegangenen Ansprüche, worin die besagte Stützkomponente (3) Durchgangsfenster (5) definiert, durch die es möglich ist, die besagte mindestens eine Gewebeschicht (2) von außerhalb der Sohle zu sehen.

7. Sohle nach irgendeinem der vorangegangenen Ansprüche, worin die Dicke der besagten mindestens einen Gewebeschicht (2) zwischen 0,1 und 1,0 mm liegt.

8. Sohle nach dem vorangegangenen Anspruch, worin die Dicke der besagten mindestens einen Gewebeschicht (2) zwischen 0,2 und 0,6 mm liegt.

9. Sohle nach irgendeinem der vorangegangenen Ansprüche, worin die besagte mindestens eine Stützkomponente (3) aus zwei Schichten (3c, 3d), einer ersten Außenschicht (3c) und einer zweiten Innenschicht (3d), besteht, die so angeordnet sind, dass sie die Innenseite der Sohle auskleiden, wobei die Gewebeschicht (2) in einer Sandwich-Position zwischen den beiden Schichten (3c und 3d) der Stützkomponente (3) angeordnet ist,
wobei die besagte erste (3c) und die besagte zweite (3d) Schicht der Stützkomponente (3) eine im Wesentlichen flache Länge (3c1, 3d1) und eine seitliche Länge (3c2, 3d2), die sich von dem Umfang oder der Peripherie der im Wesentlichen flachen Länge (3c1, 3d1) erstreckt, aufweisen.

10. Sohle nach Anspruch 9, worin die besagten beiden flachen Längen (3c1, 3d1) in Bezug auf die Gewebeschicht (2) einander gegenüberliegend angeordnet sind, während die beiden seitlichen Längen (3c2, 3d2) gegeneinander anliegen und geformt sind, um den seitlichen oder ringförmigen Wandbereich (1b) zu bilden.

11. Sohle nach irgendeinem der Ansprüche 1 bis 8, worin die besagte mindestens eine Gewebeschicht (2) ein erstes flaches Segment (2a), das im Gebrauch oberhalb oder unterhalb der Stützkomponente (3) liegt, und somit ein zweites seitliches Segment (2b), das sich im Gebrauch vom Umfang oder der Peripherie des ersten flachen Segments (2a) nach oben erstreckt, aufweist, wobei die besagte Stützkomponente (3) nur ein unteres Basisteil (3a) umfasst, das oberhalb oder unterhalb des ersten flachen Segments (2a) geformt ist.

12. Sohle nach irgendeinem der vorangegangenen Ansprüche, worin die besagte mindestens Gewebeschicht ganz oder teilweise aus Kevlar besteht.

13. Sohle nach dem vorangegangenen Anspruch, worin die besagte mindestens eine Gewebeschicht (2) Nylon in einem Gewichtsprozentsatz von etwa 65-75 % des Gesamtgewichts und Kevlar in einem Gewichtsprozentsatz von etwa 5-15 % des Gesamtgewichts umfasst.

14. Sohle nach irgendeinem der vorangegangenen Ansprüche, worin die besagte mindestens eine Gewebeschicht (2) einen Gewichtsprozentsatz von etwa 1-10 % des Gesamtgewichts einer elastifizierenden Komponente umfasst.

15. Sohle nach Anspruch 12, 13 und 14, worin die besagte mindestens eine Gewebeschicht (2) umfasst:
- Nylon in einem Gewichtsprozentsatz von etwa 69-71 % des Gesamtgewichts,
- Kevlar in einem Gewichtsprozentsatz von etwa 9-11 % des Gesamtgewichts,
- Elasthan als elastifizierende Komponente in einem Gewichtsprozentsatz von etwa 1,5-2,5 % des Gesamtgewichts,
- Polyurethan in einem Gewichtsprozentsatz von etwa 16-18 % des Gesamtgewichts.

16. Sohle nach irgendeinem der Ansprüche 1 bis 11, worin die besagte mindestens Gewebeschicht ganz oder teilweise aus Polyester besteht.

17. Sohle nach dem vorangegangenen Anspruch, worin die besagte mindestens eine Gewebeschicht die folgenden Eigenschaften aufweist:
- Dicke etwa 0,2 - 0,24 mm
- Gewicht von etwa 90 g/m²
oder als Alternative
- Dicke: 0,85 mm,
- Gewicht 225 - 230 g/m²
oder
- Dicke: 0,65 mm; und
- Gewicht: 134 g/m².

18. Schuh, umfassend mindestens eine Sohle nach irgendeinem der vorangegangenen Ansprüche und einen Abschnitt des Schafts oder einen Schaft, der an der Sohle befestigt oder mit ihr verbunden oder einstückig mit letzterer ist.

## Revendications

1. Semelle de chaussure constituée d'au moins une couche ou d'un composant de tissu (2) ainsi que d'un composant de support (3) moulé sur ou autour de ladite au moins une couche de tissu (2), ledit composant de support (3) ayant des goujons (4) ou une portion de bande de roulement pour entrer en contact avec le sol, ladite semelle comprenant une configuration avec une section principale sensiblement plate (1a) à partir du périmètre de laquelle s'étend une section de paroi latérale ou annulaire (1b), lesdits goujons (4) s'étendant depuis la section principale (1a) en cours d'utilisation, vers le bas ou en tout cas la portion de bande de roulement s'étend ou est définie par ladite section principale (1a),
dans laquelle ladite couche de tissu (2) est constituée de polyester, de nylon, de rayonne, de fibres d'aramide, de fibres thermoplastiques, de fibres métalliques ou de mélanges de ceux-ci, tandis que ledit composant de support (3) est constitué d'un matériau choisi dans le groupe constitué par le styrène-butadiène ou SBR, l'acrylonitrile butadiène ou NBR, le polybutadiène ou BR, le polychloroprène ou CR, le bromo isobutylène isoprène ou BUR, le caoutchouc naturel polyisoprène ou NR, et dans laquelle l'épaisseur de la section principale (1a) de la semelle est comprise entre 0,8 mm et 1,5 mm,
dans laquelle ladite au moins une couche de tissu (2) s'étend à la fois dans ladite section principale sensiblement plate (1a) et dans ladite section de paroi latérale ou annulaire (1b), et
dans laquelle ladite au moins une couche de tissu (2) constitue au moins 50 % ou 60 % ou 70 % de ladite section de paroi latérale ou annulaire (1b),
dans laquelle
ladite au moins une couche de tissu (2) comporte un premier segment sensiblement plat (2a) et donc un deuxième segment latéral (2b) s'étendant, en cours d'utilisation, vers le haut à partir du périmètre ou de la périphérie du premier segment sensiblement plat (2a), ladite au moins une couche de tissu (2) dans ladite section de paroi latérale ou annulaire (1b) ayant une extrémité terminale alignée ou même saillante vers le haut par rapport au composant de support (3).

2. Semelle selon la revendication 1, dans laquelle ladite au moins une couche de tissu (2) constitue au moins 90 % de ladite section de paroi latérale ou annulaire (1b).

3. Semelle selon la revendication 2, dans laquelle ladite au moins une couche de tissu (2) constitue 100 % de ladite section de paroi latérale ou annulaire (1b).

4. Semelle selon l'une quelconque des revendications 1 à 3, dans laquelle ledit composant de support principal (3) est moulé sur ou autour de la couche de tissu ou du composant (2) de manière à faire prendre à ce dernier la configuration tridimensionnelle ou finale qu'il prend dans la chaussure ou de manière à la contraindre dans cette configuration précédemment prise.

5. Semelle selon l'une quelconque des revendications précédentes, dans laquelle ledit composant de support (3) est constitué d'un matériau transparent ou translucide de manière à montrer ladite couche de tissu (2) sur l'extérieur de la semelle.

6. Semelle selon l'une quelconque des revendications précédentes, dans laquelle ledit composant de support (3) définit des fenêtres traversantes (5) à travers lesquelles il est possible de voir ladite au moins une couche de tissu (2) depuis l'extérieur de la semelle.

7. Semelle selon l'une quelconque des revendications précédentes, dans laquelle l'épaisseur de ladite au moins une couche de tissu (2) est comprise entre 0,1 et 1,0 mm.

8. Semelle selon la revendication précédente, dans laquelle l'épaisseur de ladite au moins une couche de tissu (2) est comprise entre 0,2 et 0,6 mm.

9. Semelle selon l'une quelconque des revendications précédentes, dans laquelle ledit au moins un composant de support (3) est constitué de deux couches (3c, 3d), une première couche extérieure (3c) et une deuxième couche intérieure (3d) disposées de manière à tapisser l'intérieur de la semelle, la couche de tissu (2) étant disposée en une position sandwich entre les deux couches (3c et 3d) du composant de support (3),
ladite première (3c) et ladite deuxième (3d) couche du composant de support (3) ayant une longueur sensiblement plate (3c1, 3d1) et une longueur latérale (3c2, 3d2) s'étendant à partir du périmètre ou de la périphérie de la longueur sensiblement plate (3c1, 3d1).

10. Semelle selon la revendication 9, dans laquelle lesdites deux longueurs plates (3c1, 3d1) sont placées l'une en face de l'autre par rapport à la couche de tissu (2), tandis que les deux longueurs latérales (3c2, 3d2) sont aboutées et moulées l'une contre l'autre pour former la section de paroi latérale ou annulaire (1b).

11. Semelle selon l'une quelconque des revendications 1 à 8, dans laquelle ladite au moins une couche de tissu (2) comporte un premier segment plat (2a) au-dessus ou au-dessous, en cours d'utilisation, du composant de support (3) et donc un deuxième segment latéral (2b) s'étendant, en cours d'utilisation, vers le haut à partir du périmètre ou de la périphérie du premier segment plat (2a), ledit composant de support (3) ne comprenant qu'une partie de base inférieure (3a) qui est moulée au-dessus ou au-dessous du premier segment plat (2a).

12. Semelle selon l'une quelconque des revendications précédentes, dans laquelle ladite au moins une couche de tissu est entièrement ou partiellement en Kevlar.

13. Semelle selon la revendication précédente, dans laquelle ladite au moins une couche de tissu (2) comprend du nylon dans un pourcentage en poids du total égal à environ 65-75 % et du Kevlar dans un pourcentage en poids du total égal à environ 5-15 %.

14. Semelle selon l'une quelconque des revendications précédentes, dans laquelle ladite couche de tissu (2) comprend un pourcentage en poids sur le total égal à environ 1 à 10 % d'un composant élastique.

15. Semelle selon les revendications 12, 13 et 14, dans laquelle ladite au moins une couche de tissu (2) comprend :
- du nylon dans un pourcentage en poids du total égal à environ 69-71 %,
- du Kevlar dans un pourcentage en poids du total égal à environ 9-11 %,
- de l'élasthanne en tant que composant élastique dans un pourcentage en poids du total égal à environ 1,5-2,5 %,
- du polyuréthane dans un pourcentage en poids du total égal à environ 16-18 %.

16. Semelle selon l'une quelconque des revendications 1 à 11, dans laquelle au moins une couche de tissu est entièrement ou partiellement en polyester.

17. Semelle selon la revendication précédente, dans laquelle ladite au moins une couche de tissu présente les caractéristiques suivantes :
- épaisseur d'environ 0,2 - 0,24 mm
- poids égal à environ 90 g/m²
ou comme alternative
- épaisseur : 0,85 mm,
- poids 225 - 230 g/m²
ou
- épaisseur : 0,65 mm ; et
- poids : 134 g/m².

18. Chaussure comprenant au moins une semelle selon l'une quelconque des revendications précédentes et une portion de la tige ou une tige contrainte ou reliée à la semelle ou d'une seule pièce avec cette dernière.
